(19) Europäisches Patentamt
European Patent Office
Office européen des brevets

(11) **EP 2 930 534 A1**

(12) **EUROPEAN PATENT APPLICATION**

(43) Date of publication:
**14.10.2015 Bulletin 2015/42**

(51) Int Cl.:
**G01S 19/20** (2010.01)

(21) Application number: **14001485.3**

(22) Date of filing: **11.04.2014**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (71) Applicant: **Astrium GmbH**<br>**82024 Taufkirchen (DE)**<br><br>(72) Inventor: **Oehler, Veit**<br>**85579 Neubiberg (DE)** |

(54) **A method for reducing an impact of signal anomalies on a device for position detection in a global navigation system**

(57) The present disclosure provides a method for reducing an impact of signal anomalies on a device for position detection in a global navigation system, which includes a plurality of space vehicles transmitting navigation signals to the device for position detection. The method includes the steps of:

1) receiving, by the device, a first group of navigation signals from the space vehicles, each navigation signal having an integrity risk contribution associated thereto;

2) calculating, by the device, at least one first overall integrity of the first group of navigation signals based on their associated integrity risk contributions, the method further including,

3) if the at least one first overall integrity is below a first predetermined threshold, determining a position of the device; or

4) if at least one first overall integrity exceeds the first predetermined threshold,

4a) removing n navigation signals having the highest integrity risk contributions from the first group to obtain a second group of navigation signals, n being a natural number;

4b) determining the position of the device based on the group of navigation signals obtained in step 4a).

Fig. 6

**Description**

TECHNICAL FIELD

The present disclosure is directed to a method for reducing an impact of signal anomalies on a device for position detection in a global navigation system, a device for position detection in a global navigation system and a global navigation system having such a device.

BACKGROUND OF THE INVENTION

Satellite navigation systems rely in general on very stable satellite clock performances to allow accurate satellite clock behavior prediction, which is required to accurately model the satellite clocks at a user level. The user predicts the clock behavior via related transmitted clock parameters, which are estimated on ground, based on measurements over long intervals (e.g. 1-2 days).

Unpredictable events cannot be modeled and thus cannot be compensated or predicted at the user level, and directly degrade the achievable ranging accuracy, since additional range errors due to such events are imposed. Clock, particularly Rubidium clocks, which are for instance used in Galileo (test) satellites (e.g. GIOVE-A / -B) and which are used in IOV and FOC, are affected by unpredictable frequency jumps, typically 1-2 events per month. Such jumps affect the ranging accuracy around 1 m to 10m, what has a major impact on services provided by the navigation system such as Galileo.

For typical positioning services like an Open Service (OS) this effect could be less critical, since not all users might always be affected and jumps might also only occur from time to time. Therefore, the effect could be compensated or at least mitigated by e.g. averaging over Galileo's system lifetime (i.e. 20 years), but it will still degrade the OS performance.

For integrity users like Safety-of-Life (SOL) and Public Regulated Service (PRS) users, such averaged compensation is not possible, since a certain accuracy of the individual ranging signal has to be ensured with very high confidence. Thus, all integrity information for each satellite and all of the time would need to be a-priori degraded to also consider the not predictable events, what jeopardizes the related major services in terms of service availability.

If the unpredictable events like satellite clock frequency jumps could be detected on ground and corresponding warnings could be broadcasted to all users, the integrity services availability degradation could be significantly compensated or reduced. However, since such events typically affect the ranging signals below the ground integrity detection barrier thresholds (around 5m vs. typical range errors around 2m), most satellite clock frequency jumps cannot be detected on ground, and therefore the integrity information would need to be a-priori increased, with significant integrity service availability degradation.

SUMMARY OF THE INVENTION

Therefore, the objective of the invention is to ensure integrity services, e.g. of Galileo, which are jeopardized in the presence of satellite clock frequency jumps.

This objective is achieved by a method for reducing an impact of signal anomalies on a device for position detection in a global navigation system, and by a device for reducing an impact of signal anomalies on a device for position detection in a global navigation system according to the independent claims.

This objective is particularly achieved by modifying a user integrity algorithm, only considering measurements that would allow for service usage even in case of jumping signals. An aspect to reduce the effect of satellite clock frequency jumps (and other similar events), particularly if such events cannot be avoided at the satellite level or be detected and removed at the ground segment level, lies in avoiding the usage of affected satellites at the user level through suitable user algorithm modifications.

Such an approach limits the impact on the projects such as Galileo IOV/CDE1 and FOC, since neither space segment design changes nor ground segment modifications are required, which typically significantly impact cost and schedule. Only additional analyses and concept modifications at system level are required (together with the relevant test user updates), which are not affecting significantly the related mentioned projects.

The basic idea of the invention is to overcome at user algorithm level the problem that small errors in the order of a few meters, which are imposed by e.g. satellite clock frequency jumps, can neither be avoided at satellite level, nor be detected by a ground integrity monitoring concept, e.g. of Galileo.

This is done by related user integrity algorithm modifications that avoid to a maximum extend the usage of possibly affected signals, and to consider such signals that have acceptable impact at the user level from an integrity service availability point of view.

Those modified user algorithms do not require for significant system, space or ground segment design changes, since only the final user algorithm implementation is affected. Further, minor data dissemination adjustments (i.e. SIS-ICD updates) could also be considered to further improve the algorithm modification compensation.

Thus, following such basic ideas of the invention, almost no modifications for e.g. IOV/CDE1 and FOC projects are required to compensate the most critical frequency jump behavior.

According to an aspect of the invention, a method for reducing an impact of signal anomalies on a device for position detection in a global navigation system, which comprises a plurality of space vehicles transmitting navigation signals to the device for position detection, is provided. The method includes the steps of:

> 1) receiving, by the device, a first group of navigation signals from the space vehicles, each navigation signal having an integrity risk contribution associated thereto;
> 2) calculating, by the device, at least one first overall integrity of the first group of navigation signals based on their associated integrity risk contributions, the method further including,
> 3) if the at least one first overall integrity is below a first predetermined threshold, determining a position of the device; or
> 4) if at least one first overall integrity exceeds the first predetermined threshold,
>
>> 4a) removing n navigation signals having the highest integrity risk contributions from the first group to obtain a second group of navigation signals, n being a natural number;
>> 4b) determining the position of the device based on the group of navigation signals obtained in step 4a).

According to some embodiments, step 4a) further includes the steps of

> 4a1) calculating, by the device, at least one second overall integrity of the second group of navigation signals based on their associated integrity risk contributions, the method further including,
> 4a2) if the at least one second overall integrity is below a second predetermined threshold, proceeding with step 4b); or
> 4a3) if at least one first overall integrity exceeds the second predetermined threshold, removing at least one further navigation signal from the second group to obtain a third group of navigation signals, wherein the at least one removed further navigation signal has the highest integrity risk contribution of the navigation signals of the second group.

According to some embodiments, steps 4a1) to 4a3) are repeatedly performed until the calculated overall integrity is below a respective predetermined threshold.
According to some embodiments, the calculating the at least one first overall integrity in step 2) includes:

- defining one or more subsets of the first group of navigation signals, each subset having k modified navigation signals, k being a natural number;
- calculating one first overall integrity for each one of the subsets, wherein the method proceeds with the determining the position of the device in step 3) only if the first overall integrities of all of the subsets are below the first predetermined threshold, and otherwise proceeds with step 4).

According to some embodiments, the step of calculating the at least one second overall integrity in step 4a1) includes:

- defining one or more subsets of the second group of navigation signals, each subset having p modified navigation signals, p being a natural number;
- calculating one second overall integrity for each of the subsets, wherein the method proceeds with the determining the position of the device in step 4b) only if the second overall integrities of all of the subsets are below the second predetermined threshold, and otherwise repeats step 4a3).

According to some embodiments, the modified navigation signal of the respective navigation signal is generated by

- putting the navigation signal to a ground detection threshold, or
- inflating signal-in-space accuracy information of the navigation signal.

According to some embodiments, the inflating the signal-in-space accuracy information of the navigation signal uses the equation

$$SISA_i = \sigma \cdot e^{\frac{b^2}{2 \cdot \sigma^2}},$$

wherein $\sigma$ is the signal-in-space accuracy of the navigation signal and b is a signal anomaly threshold, particularly a space vehicle clock frequency jump barrier.
According to some embodiments, the method further includes the step of

> 1a) calculating an initial overall integrity of a number of r navigation signals having the lowest integrity risk contributions, r being a natural number; and
> 1 b) if the initial overall integrity exceeds an initial threshold, declaring the position detection to be impossible; or
> if the initial overall integrity is below the initial threshold, proceeding with step 2).

According to some embodiments, r is a minimum number of navigation signals required for position detection, and particularly at least four.
According to an aspect, the device is configured for performing the method described above.
According to another aspect of the present invention, a device for position detection in a global navigation system, which comprises a plurality of space vehicles transmitting navigation signals to the device for position detection, is provided. The device includes:

- a receiver configured for receiving a first group of navigation signals from the space vehicles, each navigation signal having an integrity risk contribution associated thereto; and
- a position determining device, configured for
- calculating, by the device, at least one first overall integrity of the first group of navigation signals based on their associated integrity risk contributions,
- if the at least one first overall integrity is below a first predetermined threshold, determining a position of the device; or
- if at least one first overall integrity exceeds the first predetermined threshold,

  - removing n navigation signals having the highest integrity risk contributions from the first group to obtain a second group of navigation signals, n being a natural number, and
  - determining the position of the device based on the obtained group of navigation signals.

According to still another aspect, a global navigation system is provided, including:

- at least one device as described above; and
- the plurality of space vehicles transmitting the navigation signals to the at least one device.

According to some embodiments, each space vehicle includes at least one clock, particularly a Rubidium clock.

According to yet another aspect, a user algorithm method is provided. The user algorithm method minimizes the impact of satellite signal anomalies such as clock frequency jumps without a priori knowledge of the satellite's clock type, by focusing on safe/integer (at the ground detection threshold or with inflated integrity information according to navigation data age) pre-selected signal combinations e.g. all signals in view or lowest risk contribution, and safe/integer removal (or addition) of GNSS signals if required.

BRIEF DESCRIPTION OF THE DRAWINGS

So that the manner in which the above recited features of the present invention can be understood in detail, a more particular description of the invention, briefly summarized above, may be had by reference to embodiments. The accompanying drawings relate to embodiments of the invention and described in the following:

Fig. 1    shows a GIOVE-A satellite clock frequency performance;

Fig. 2    shows a GIOVE-B satellite clock frequency performance;

Fig. 3    shows a GPS Rb-satellite clock frequency performance;

Fig. 4    shows a range impact of satellite clock frequency jumps;

Fig. 5    shows an example of an integrity information degradation; and

Fig. 6    shows a flowchart of a method according to an embodiment described herein.

DETAILED DESCRIPTION OF PREFERRED EMBODIMENTS

Each of the following examples is provided by way of explanation of the invention and is not meant as a limitation of the invention. Further, features illustrated or described as part of one embodiment can be used on or in conjunction with other embodiments to yield yet a further embodiment. It is intended that the description includes such modifications and variations. Further, although the following description mainly refers to Galileo, it is to be understood that the present invention is not limited thereto, and could be employed with any other navigation system.

*Introduction*

Satellite navigation systems strongly depend on the predictability of the used onboard satellite clocks and their performance, since such predictability directly drives the related service performance, e.g. in terms of positioning accuracy and thus service availability. If such performance is degraded by not predictable events like onboard satellite clock frequency jumps, this degrades the finally achievable service performance at user level.

From various navigation satellite experimentation results (e.g. GIOVE satellites, but also GPS experimentation) it is confirmed that clock frequency jumps will occur for rubidium clocks, which are for instance part of the Galileo IOV as well as FOC satellite design (and GPS as well). Such an effect has not been considered for the Galileo design so far and jeopardizes positioning accuracy, as well as integrity services, and thus the complete Galileo design.

For the Galileo integrity services this effect is most severe since only big jumps above the typical ground integrity detection thresholds can be detected, whereas the typical smaller jumps cannot be detected and would therefore significantly degrade the integrity services. This degradation is caused by the signals-in-space accuracy (SISA) that is provided to the user as major integrity information and overbounds the real signal-in-space error. If additional errors as caused by the frequency jumps need to be considered, the SISA needs to be increased accordingly to such high values, that no feasible integrity service performances could be achieved.

The present invention proposes methods how to recover from such an effect at user algorithm level, to limit the impact of satellite clock frequency jumps on the Galileo services.

The following sections therefore describe

- the known satellite clock frequency jump characteristics of GIOVE as well as GPS rubidium clocks,
- the possible impact in the range domain and required SISA information a-priori degradation,
- how to update the user integrity algorithm if the signal clock source type is known at the user level, and
- how to update the user integrity algorithm if the signal clock source type is not known to the user.

*GIOVE and GPS Satellite Clock Frequency Jumps*

Galileo Phase CDE1 and IOV experimentation results, and IOV and FOC clock analysis already confirmed that clock frequency jumps will occur for rubidium clocks.

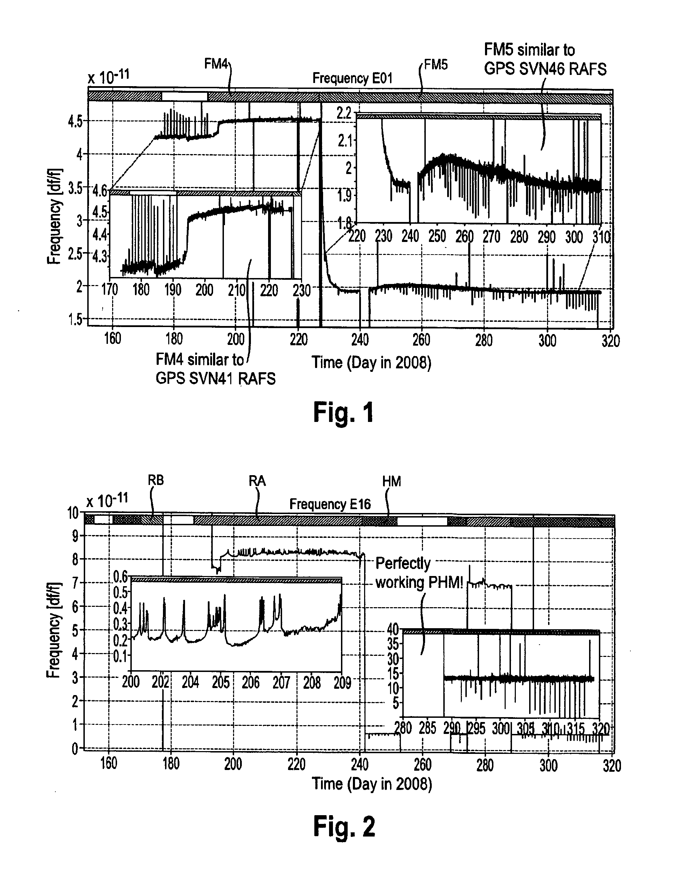

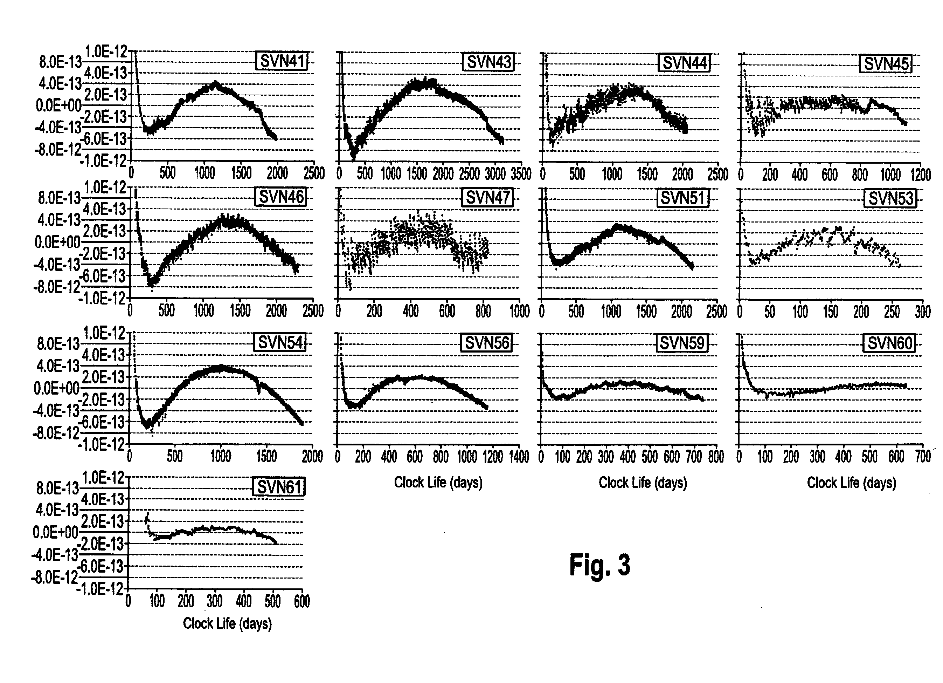

Referring to FIGs. 1 and 3, such behavior has been measured and observed from GIOVE Rubidium clocks, as well as GPS satellites that currently operate with Rb signals. PHM (maser type satellite clock) clock performances as shown in FIG. 2 do not jump significantly.

It can be seen that such Rubidium clock jump characteristics needs to be considered as normal behavior, rather than a rarely occurring event. Such an effect is also known for longer tested navigation satellites, like the mentioned GPS satellites.

The PHM (master) performance shall also be highlighted (FIG. 2), since such signals do not show any jumps, and should therefore be preferred at the user level.

Since the user cannot a-priori model such behavior with the already provided clock parameters, an additional error will occur in the range domain of the affected satellite, depending on the jump magnitude as well as the time between jump occurrence and receipt of new navigation data (currently specified to not more than 100 minutes) for that satellite.

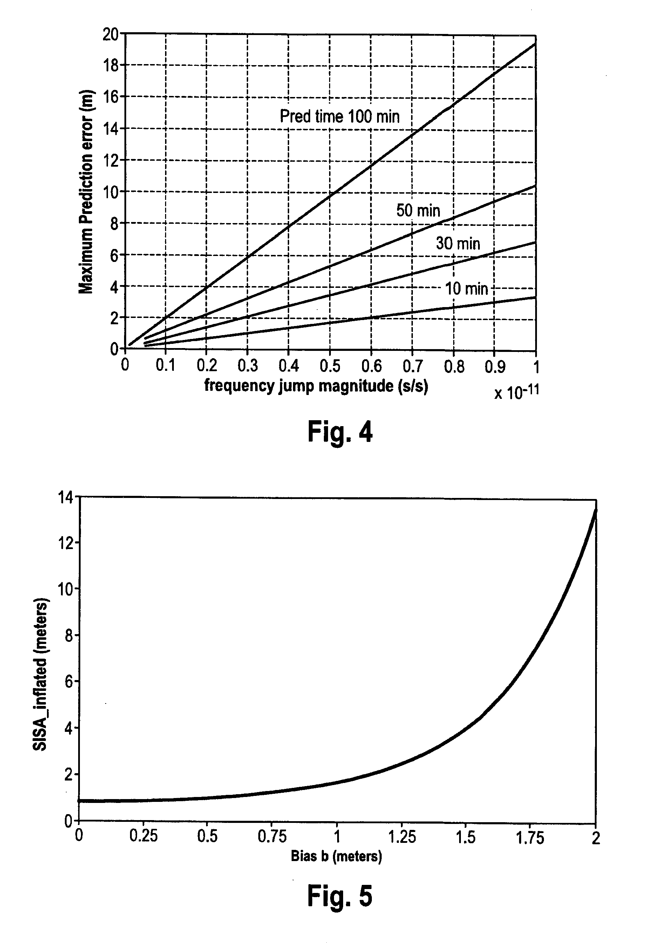

FIG. 4 shows the maximum prediction error in the range domain depending on the jump magnitude and navigation message update rate/age of the message.

Typical jumps in the order of around 1 e-12 s/s would therefore degrade the ranging accuracy for the affected satellite by about 2 meters in case of a 100 minutes baseline navigation message update rate. For smaller update rates the imposed range error decreases significantly, i.e. the age of the navigation message should also be considered at the user level.

If only 1 or 2 visible satellites are affected by a clock jump and the related rang error increases, the positioning accuracy for that user is slightly degraded, but globally for all users the impact on the related Galileo Open Service performance is rather limited.

For the transmitted major SISA integrity information the validity of such information needs to be ensured with high confidence to any user for each satellite, and if the user is considering such information (and related signal), the information would need to be increased to properly consider the additional range error.

The following equation can be used to inflate the SISA in case of biases b and standard deviation σ of the underlying Gaussian distribution. Other and less conservative concepts are also possible.

$$SISA_i = \sigma \cdot e^{\frac{b^2}{2 \cdot \sigma^2}}$$

To provide a conservative upper bound for the inflation of the SISA to ensure overbounding of the signal-in-space accuracy, the received SISA for the relevant satellite can be used as standard deviation σ, and the applicable onboard clock frequency jump barrier threshold as bias b (either received for the specific satellite via the navigation message, or hard defined also within the receiver).

FIG. 5 illustrates SISA inflation for 85cm standard deviation (received SISA) for different biases up to 2 meters.

In case of 1.0m bias or onboard jump barrier threshold, which represents a typical frequency jump of 5e-13 s/s (for 100 minutes navigation data validity time), the inflated SISA would correspond to a value of around 1.7 meters, two times higher than the 85cm SISA upper bound specification that is required to globally achieve integrity service performance.

The maximum prediction errors would need to be smaller than about 50cm to 100cm to not degrade the SISA performance too much, which might jeopardize the Galileo integrity services performance.

However, since only RAFS signals are affected, the final impact on the integrity service performance is limited, especially if PHM is considered as master clock.

*User Algorithm Modification with All Available Signals*

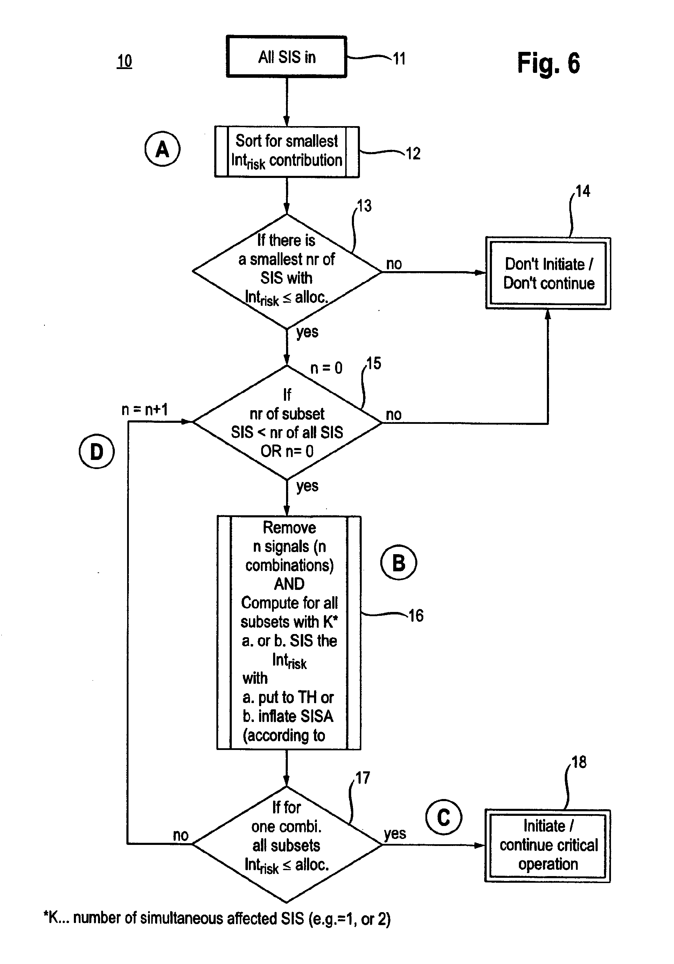

Particularly, Fig. 6 shows a flowchart of a method according to an embodiment described herein.

If it is not known if the received signal comes from a RAFS or PHM source, the impact on potentially degraded / jumping signals can be reduced through the consideration of the flowchart shown in FIG. 6.

According to some embodiments, the method for reducing an impact of signal anomalies on a device for position detection in a global navigation system is provided. The global navigation system may include a plurality of space vehicles transmitting navigation signals to the device for position detection.

According to an aspect, in step 11, the device may receive a first group of navigation signals from the space vehicles, each navigation signal having an integrity risk contribution associated thereto. In some implementations, the device may sort the received navigation signals for the smallest integrity risk e.g. in a sorting list (step 12).

The method may further include the steps of calculating an initial overall integrity of a number of r navigation signals having the lowest integrity risk contributions, r being a natural number, and performing in step 13 the following decision steps or processes:

- if the initial overall integrity exceeds an initial threshold, declaring the position detection to be impossible (step 14); or
- if the initial overall integrity is below the initial threshold, proceeding with step 15.

In some implementations, r is a minimum number of navigation signals required for position detection, and particularly at least four and particularly five.

In the following, the term "subset" may refer to a group of navigation signals having a number of modified navigation signals generated by putting them to the Ground Detection Threshold TH, and/or inflating SISA information.

If a "no"-decision is made in step 15 with respect to a number of subset SIS (signal in space, i.e. navigation signals) being smaller than a number of all SIS, or n being equal to 0, the method proceeds with step 14 and declares the position detection to be impossible/ does not continue with the method.

If a "yes"-decision is made in step 15 with respect to a number of subset SIS being smaller than a number of all SIS, or n being equal to 0, the method proceeds with step 16.

According to some embodiments, n is a natural number including zero, and is particularly in the range of 0 to 30.

The device calculates at least one first overall integrity of the first group of navigation signals based on their associated integrity risk contributions. This may correspond to a case where n equals zero, i.e., no navigation signal has been removed or discarded yet and thus, service integrity or availability is check based on all received navigation signals. In other words, the first overall integrity may be calculated for (or based on) all received navigation signals constituting the first group.

Then, if the at least one first overall integrity is below a first predetermined threshold ("yes" in step 17), the device declares the position detection to be possible and determines in step 18 the position of the device based on the navigation signals of the first group, which may include all received navigation signals.

If at least one first overall integrity exceeds the first predetermined threshold ("no" in step 17), in step 16 n=n+1 navigation signals having the highest integrity risk contributions are removed from the first group to obtain a second group of navigation signals, and the position of the device is determined based on the second group of navigation signals (step 18). As an example, when n was zero before, then now n= 0+1=1 navigation signal is removed.

Steps 15, 16 and 17 may be repeatedly performed until either a position determination is possible in step 17, or in step 15 it is determined that detection position is impossible as explained above.

In some implementations, calculating the at least one overall integrity, and particularly the first or second overall integrity, may include:

- defining one or more subsets of the respective group of navigation signals, each subset having an number of modified navigation signals;
- calculating one respective overall integrity for each of the subsets, wherein the method proceeds with the determining the position of the device only if the respective overall integrities of all of the subsets are below the respective predetermined threshold, and otherwise repeats steps 15, 16 and 17.

According to some embodiments, the term "subset" may refer to a group of navigation signals having a number of modified navigation signals generated by putting them to the ground detection threshold TH, and/or inflating SISA information. Particularly, the modified navigation signals of a subset may be generated by putting the navigation signal to a ground detection threshold, or by inflating signal-in-space accuracy (SISA) information of the navigation signal.

As an example, the inflating the signal-in-space accuracy information of the navigation signal may use the equation

$$SISA_i = \sigma \cdot e^{\frac{b^2}{2 \cdot \sigma^2}},$$

wherein $\sigma$ is the signal-in-space accuracy of the navigation signal and b is a signal anomaly threshold, particularly a space vehicle clock frequency jump barrier.

According to some embodiments, while still referring to FIG. 6 again, the following major steps could be performed:

A. Each received signal contributes with a specific integrity risk contribution that can be sorted - typically at least 4 signals are required (and 5 for integrity calculations). Thus, only if there is a smallest number of SIS that are required (e.g. 5) with lowest risk contributions, for which the overall integrity risk is below the given allocation, the algorithm shall start. Otherwise there will never be a subset fulfilling such condition.

B. If the integrity service is not available with all signals, the loop will start to remove n signals (e.g. starting with the largest risk contributing signal - remaining set is called "combination"), and calculating the integrity risk for all "subsets" in a safe way, i.e. by putting K signals simultaneously either to the ground detection threshold TH, or inflating the SISA information.

C. If for one combination all subsets (i.e. possible threshold or inflation combinations) allow for starting or continuation of the critical operation, the service is declared available.

D. If there is no combination for which all subsets are below the allocated integrity risk, the loop removes n+1 signals and re-starts again.

According to some embodiments, the term "combination" may refer to the groups of navigation signals obtained by removing individual signals. In some implementations, the term "subset" may refer to a group of navigation signals having a number of modified navigation signals generated by putting them to the ground detection threshold TH, and/or inflating SISA information.

It is noted that equivalent approaches that follow the same method are possible, like to only start with the smallest subset of signals and to add signals with next lowest risk contributions, instead of starting with all signals, and removing the ones with largest contributions.

The invention describes a method how to minimize the impact of satellite clock frequency jumps (and other similar causes) on e.g. Galileo's integrity services, by only modifying the user algorithm. Additional information could further be provided via updated messaged (i.e. SIS-ICD update) to improve the concepts, but is not necessarily required.

The invention ensures a valid and feasible Galileo integrity service from an availability point of view, without significant changes at the space or ground segment level. Only minor changes at the system and user level are required.

While the foregoing is directed to embodiments of the invention, other and further embodiments of the invention may be devised without departing from the basic scope thereof, and the scope thereof is determined by the claims that follow.

**Claims**

1. A method for reducing an impact of signal anomalies on a device for position detection in a global navigation system, which comprises a plurality of space vehicles transmitting navigation signals to the device for position detection, the method comprises the steps of:

   1) receiving, by the device, a first group of navigation signals from the space vehicles, each navigation signal having an integrity risk contribution associated thereto;

   2) calculating, by the device, at least one first overall integrity of the first group of navigation signals based on their associated integrity risk contributions, the method further including,

   3) if the at least one first overall integrity is below a first predetermined threshold, determining a position of the device; or

   4) if at least one first overall integrity exceeds the first predetermined threshold,

       4a) removing n navigation signals having the highest integrity risk contributions from the first group to obtain a second group of navigation signals, n being a natural number;

       4b) determining the position of the device based on the group of navigation signals obtained in step 4a).

2. Method of claim 1, wherein step 4a) further includes the steps of

       4a1) calculating, by the device, at least one second overall integrity of the second group of navigation signals based on their associated integrity risk contributions, the method further including,

       4a2) if the at least one second overall integrity is below a second predetermined threshold, proceeding with step 4b); or

       4a3) if at least one first overall integrity exceeds the second predetermined threshold, removing at least one further navigation signal from the second group to obtain a third group of navigation signals, wherein the at least one removed further navigation signal has the highest integrity risk contribution of the navigation signals of the second group.

3. Method of claim 2, wherein steps 4a1) to 4a4) are repeatedly performed until the calculated overall integrity is below a respective predetermined threshold.

4. Method of one of claims 1 to 3, wherein the calculating the at least one first overall integrity in step 2) includes:

       - defining one or more subsets of the first group of navigation signals, each subset having k modified navigation signals, k being a natural number;

       - calculating one first overall integrity for each one of the subsets, wherein the method proceeds with the determining the position of the device in step 3) only if the first overall integrities of all of the subsets are below the first predetermined threshold, and otherwise proceeds with step 4).

5. Method of claim 2, wherein the step of calculating the at least one second overall integrity in step 4a1) includes:

   - defining one or more subsets of the second group of navigation signals, each subset having p modified navigation signals, p being a natural number;
   - calculating one second overall integrity for each of the subsets, wherein the method proceeds with the determining the position of the device in step 4b) only if the second overall integrities of all of the subsets are below the second predetermined threshold, and otherwise repeats step 4a3).

6. Method of claim 4 or 5, wherein the modified navigation signal of the respective navigation signal is generated by

   - putting the navigation signal to a ground detection threshold, or
   - inflating signal-in-space accuracy information of the navigation signal.

7. Method of claim 6, wherein the inflating the signal-in-space accuracy information of the navigation signal uses the equation

$$SISA_i = \sigma \cdot e^{\frac{b^2}{2 \cdot \sigma^2}},$$

   wherein $\sigma$ is the signal-in-space accuracy of the navigation signal and b is a signal anomaly threshold, particularly a space vehicle clock frequency jump barrier.

8. Method of one of claims 1 to 7, further including the step of

   1a) calculating an initial overall integrity of a number of r navigation signals having the lowest integrity risk contributions, r being a natural number; and
   1b) if the initial overall integrity exceeds an initial threshold, declaring the position detection to be impossible; or
   if the initial overall integrity is below the initial threshold, proceeding with step 2).

9. Method of claim 8, wherein r is a minimum number of navigation signals required for position detection, and particularly at least four.

10. Device for position detection in a global navigation system, which comprises a plurality of space vehicles transmitting navigation signals to the device for position detection, the device including:

    - a receiver configured for receiving a first group of navigation signals from the space vehicles, each navigation signal having an integrity risk contribution associated thereto; and
    - a position determining device, configured for
    - calculating, by the device, at least one first overall integrity of the first group of navigation signals based on their associated integrity risk contributions,
    - if the at least one first overall integrity is below a first predetermined threshold, determining a position of the device; or
    - if at least one first overall integrity exceeds the first predetermined threshold,

      - removing n navigation signals having the highest integrity risk contributions from the first group to obtain a second group of navigation signals, n being a natural number, and
      - determining the position of the device based on the obtained group of navigation signals.

11. Global navigation system, comprising:

    - at least one device of claim 10; and
    - the plurality of space vehicles transmitting the navigation signals to the at least one device.

12. Global navigation system of claim 11, wherein each space vehicle includes at least one clock.

13. Global navigation system of claim 12, wherein the clock is a Rubidium clock.

**Fig. 1**

**Fig. 2**

Fig. 3

**Fig. 4**

**Fig. 5**

**Fig. 6**

10

All SIS in — 11

(A)

Sort for smallest Int$_{risk}$ contribution — 12

13

If there is a smallest nr of SIS with Int$_{risk}$ ≤ alloc. — no → Don't Initiate / Don't continue — 14

yes

n = 0 — 15

(D) n = n+1 → If nr of subset SIS < nr of all SIS OR n= 0 — no →

yes

Remove n signals (n combinations) AND Compute for all subsets with K* a. or b. SIS the Int$_{risk}$ with a. put to TH or b. inflate SISA (according to — 16 (B)

17

If for one combi. all subsets Int$_{risk}$ ≤ alloc. — no (left) / yes → (C) → Initiate / continue critical operation — 18

*K... number of simultaneous affected SIS (e.g.=1, or 2)

Europäisches
Patentamt

European
Patent Office

Office européen
des brevets

# EUROPEAN SEARCH REPORT

Application Number

EP 14 00 1485

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 565 675 A1 (ASTRIUM GMBH [DE]) 6 March 2013 (2013-03-06) * paragraph [0003] * * paragraph [0007] * * paragraph [0014] - paragraph [0015] * * paragraph [0037] - paragraph [0056] * * claim 1 * * figure 4 * ----- | 1-13 | INV. G01S19/20 |
| X  A | DE 10 2007 006612 A1 (EADS ASTRIUM GMBH [DE] ASTRIUM GMBH [DE]) 7 August 2008 (2008-08-07) * paragraph [0003] * * paragraph [0008] - paragraph [0014] * * paragraph [0023] - paragraph [0030] * * paragraph [0037]; figure 11 * ----- | 1-3, 10-13  4-9 | |
| X  A | US 2007/241958 A1 (NICHOLSON PETER [AU] ET AL) 18 October 2007 (2007-10-18) * paragraph [0008] - paragraph [0009] * * paragraph [0030] - paragraph [0031] * ----- | 1-3, 10-13  4-9 | TECHNICAL FIELDS SEARCHED (IPC)  G01S |

The present search report has been drawn up for all claims

| Place of search | Date of completion of the search | Examiner |
|---|---|---|
| Munich | 6 October 2014 | Haugg, Sabine |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 14 00 1485

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2014

| Patent document cited in search report | | Publication date | Patent family member(s) | | Publication date |
|---|---|---|---|---|---|
| EP 2565675 | A1 | 06-03-2013 | EP | 2244097 A1 | 27-10-2010 |
| | | | EP | 2565675 A1 | 06-03-2013 |
| | | | ES | 2461093 T3 | 16-05-2014 |
| | | | US | 2010265132 A1 | 21-10-2010 |
| DE 102007006612 A1 | | 07-08-2008 | AT | 554406 T | 15-05-2012 |
| | | | CA | 2677377 A1 | 14-08-2008 |
| | | | DE | 102007006612 A1 | 07-08-2008 |
| | | | EP | 2122382 A1 | 25-11-2009 |
| | | | US | 2010141511 A1 | 10-06-2010 |
| | | | WO | 2008095468 A1 | 14-08-2008 |
| US 2007241958 | A1 | 18-10-2007 | US | 2007241958 A1 | 18-10-2007 |
| | | | US | 2009079623 A1 | 26-03-2009 |
| | | | US | 2009085802 A1 | 02-04-2009 |

EPO FORM P0459

For more details about this annex : see Official Journal of the European Patent Office, No. 12/82